# EUROPÄISCHE PATENTSCHRIFT

(11) **EP 3 956 201 B1**
(45) Veröffentlichungstag und Bekanntmachung des Hinweises auf die Patenterteilung: **03.01.2024**
(21) Anmeldenummer: 20700661.0
(22) Anmeldetag: 09.01.2020
(51) Int. Cl.: B62D 5/04, B62D 1/19, B62D 5/00, B62D 1/181

(54) **STEER-BY-WIRE LENKSYSTEM FÜR EIN KRAFTFAHRZEUG MIT KONZENTRISCHEM ANTRIEB**
STEER-BY-WIRE STEERING SYSTEM FOR A MOTOR VEHICLE COMPRISING A CONCENTRIC DRIVE UNIT
SYSTÈME DE DIRECTION À COMMANDE PAR CÂBLE POUR UN VÉHICULE AUTOMOBILE DOTÉ D'UN ENTRAÎNEMENT CONCENTRIQUE

(30) Priorität: 17.04.2019 DE 102019205615
(43) Veröffentlichungstag der Anmeldung: 23.02.2022
(73) Patentinhaber: VOLKSWAGEN AKTIENGESELLSCHAFT, 38440 Wolfsburg (DE)
(72) Erfinder: MARX, Peter, 38553 Wasbüttel (DE); PRZYBYLSKI, Mirko, 38100 Braunschweig (DE); KNOPP, Thomas, 38159 Vechelde (DE); KREIS, Christopher, 38126 Braunschweig (DE); WILSKE, Ernst, 39291 Nedlitz (DE)
(86) Internationale Anmeldenummer: PCT/EP2020/050393
(87) Internationale Veröffentlichungsnummer: WO 2020/211987

(56) Entgegenhaltungen:
- EP-A1- 3 476 692
- EP-A2- 1 201 528
- DE-A1-102015 224 602
- DE-C1- 19 524 196
- JP-A- H0 539 043
- US-A- 2 769 351

## Beschreibung

Die Erfindung betrifft ein Steer-by-wire Lenksystem für ein Kraftfahrzeug gemäß dem Oberbegriff des Anspruchs 1. Steer-by-wire Systeme zeichnen sich dadurch aus, dass ein Lenkbefehl von einem Lenkrad oder einem anderen Steuerinstrument über ein Steuergerät oder in sonstiger Art und Weise elektrisch zu einem Aktor weitergeleitet wird, welcher dann Lenkbefehle an lenkbaren Rädern des Kraftfahrzeuges ausführt. Solche Systeme lassen sich ohne mechanische Verbindung zwischen dem Lenkrad und den Rädern realisieren und schaffen insoweit große konstruktive Freiheiten insbesondere dort, wo bei konventionellen Lenksystemen mit einer mechanischen Verbindung zwischen Lenkrad und Rädern insbesondere eine Lenksäule mit einer sich vom Lenkrad bis zu einem Ritzel erstreckenden Lenkwelle angeordnet ist. Bei manchen Bauformen ist im Bereich der Lenkwelle zusätzlich eine Lenkhilfsvorrichtung im Bereich der Lenkwelle angeordnet, die im Falle eines Steer-by-wire Lenksystems dann ebenfalls entfallen kann und zusätzliche konstruktive Freiheit schafft.

Aus EP 1 201 528 A2 ist ein als "simulated steering feel system (SSFS)" bezeichnetes Force Feedback System für eine Lenkung bekannt, das einen Antriebsmotor aufweist, mittels welchem eine Drehmoment-Rückmeldung auf ein Lenkrad oder ein anderes Steuerinstrument übertragbar ist. In dem Dokument wird auch auf den Einsatz solcher Systeme in Steer-by-wire Lenkungen verwiesen.

Aus DE 10 2015 224 602 A1 ist eine verstellbare Lenksäule für eine steer-by-wire-Lenkeinrichtung eines Kraftfahrzeugs bekannt. Diese Lenksäule umfasst eine Stelleinheit, die eine in einer Manteleinheit um eine Längsachse drehbar gelagerte Lenkspindel umfasst. Die Manteleinheit weist ein erstes Mantelrohr auf, in dem zumindest ein zweites Mantelrohr bezüglich der Längsachse drehfest angeordnet und teleskopierend axial verschiebbar gelagert ist. Dabei ist mit dem ersten und dem zweiten Mantelrohr ein Stellantrieb verbunden, von dem das zweite Mantelrohr relativ zum ersten Mantelrohr axial ein- und ausfahrbar ist, und der einen Spindeltrieb umfasst mit einer parallel zur Längsachse angeordneten, von einem elektrischen Stellmotor drehend antreibbaren Gewindespindel, die sich an dem einem Mantelrohr abstützt und die in eine Spindelmutter eingeschraubt ist. Die Spindelmutter ist dabei drehfest an dem anderen Mantelrohr angebracht. Diese Lenksäule kann als Steer-by-wire Lenksystem für ein Kraftfahrzeug gemäß dem Oberbegriff von Anspruch 1 angesehen werden.

Der Erfindung liegt die Aufgabe zugrunde, ein Steer-by-wire Lenksystem für ein Kraftfahrzeug zur Verfügung zu stellen, das eine kompakte Konstruktion aufweist und mittels welchem ein möglichst großer Verstellweg in Drehachsenrichtung des Lenkrades derart ermöglicht ist, dass das Lenkrad deutlich von einem Fahrzeugführer entfernbar ist, insbesondere mit einem Verstellweg von mindestens 200 mm. Ferner soll das Steer-by-wire Lenksystem crashoptimiert gestaltet sein.

Die Lösung der Aufgabe erfolgt erfindungsgemäß mit den Merkmalen des unabhängigen Anspruchs.

Weitere praktische Ausführungsformen und Vorteile der Erfindung sind in Verbindung mit den abhängigen Ansprüchen beschrieben.

Ein erfindungsgemäßes Steer-by-wire Lenksystem für ein Kraftfahrzeug umfasst ein Lenkrad, welches um eine Lenkachse rotierbar gelagert ist, um durch die Erfassung einer aktiven Drehbewegung des Lenkrades, ein Lenkmoment bzw. eine Lenkkraft auf lenkbare Räder des Kraftfahrzeuges zu übertragen, wobei mindestens ein Lenk-Widerstandsmittel vorgesehen ist, mittels welchem permanent oder abhängig von einem oder mehreren Parametern das für das Drehen des Lenkrades erforderliche Moment erhöht wird, wobei ein Lenkrad-Verstellmittel vorgesehen ist, um die axiale Position des Lenkrades entlang der Lenkachse verstellen zu können. Dabei ist eine konzentrisch zur Lenkachse gelagerte Antriebseinheit für das Lenkrad-Verstellmittel vorgesehen. Ferner weist die Antriebseinheit eine konzentrisch zur Lenkachse angeordnete Gewindespindel und ein funktional mit dieser Gewindespindel gekoppeltes Gewindeelement auf, wobei die Gewindespindel vollständig innerhalb eines einseitig offenen Außengehäuses angeordnet ist, das aus einem Gehäusemantel und einer quer zur Lenkachse verlaufenden Gehäuserückwand gebildet ist. Dabei weist das Lenkrad-Verstellmittel mindestens ein Crash-Element auf, das im Falle der Überschreitung einer auf das Lenkrad in Richtung der Lenkachse wirkenden Maximalkraft eine Relativbewegung des Lenkrades in Richtung der Lenkachse ermöglicht. Im Bereich der Gehäuserückwand ist zwischen dem Gehäusemantel und einem mittleren Bereich der Gehäuserückwand, der sich in axialer Richtung an die Gewindespindel anschließt, als Crash-Element ein Verformungselement angeordnet und derart gestaltet, dass es im Falle der Überschreitung einer auf das Lenkrad in Richtung der Lenkachse wirkenden Maximalkraft eine Relativbewegung des Lenkrades in Richtung der Lenkachse ermöglicht ist.

Die Drehbewegung des Lenkrades wird dabei insbesondere durch einen Fahrzeugführer durchgeführt. Die erfindungsgemäße Konstruktion, bei welcher die Antriebseinheit für das Lenkrad-Verstellmittel konzentrisch zur Lenkachse angeordnet ist, ermöglicht es, zum einen eine sehr kompakte Lenkrad-Verstellmitteleinheit zu realisieren und zum anderen mit dieser Lenkrad-Verstellmitteleinheit relativ große, sich in Richtung der Lenkachse erstreckende Verstelltiefen für das Lenkrad zu realisieren, insbesondere Verstelltiefen von mehr als 100 mm, vorzugsweise von mehr als 150 mm und weiter vorzugsweise mehr als 200 mm. Derartige Verstelltiefen sind in Verbindung mit Steer-by-wire Lenksystemen insbesondere dann vorteilhaft, wenn das Kraftfahrzeug Mittel zum vollautonomen oder teilautonomen Fahren aufweist. In diesem Fall kann das Lenkrad, insbesondere in Phasen, in welchen das Lenkrad vom Fahrzeugführer nicht oder nur bedarfsweise erreichbar sein muss, in Fahrzeuglängsrichtung nach vorne, insbesondere in Richtung einer Instrumententafel des Kraftfahrzeuges, verstellt und somit vom Fahrzeugführer weg bewegt werden, um dem Fahrzeugführer eine größere Bewegungsfreiheit zu verschaffen.

Dadurch, dass das Lenkrad-Verstellmittel des erfindungsgemäßen Steer-by-wire Lenksystems mindestens ein Crash-Element aufweist, das - insbesondere durch Versagen oder durch eine Elastizität, die eine reversible Auslenkung ermöglicht - im Falle der Überschreitung einer auf das Lenkrad in Richtung der Lenkachse wirkenden Maximalkraft eine Relativbewegung des Lenkrades in Richtung der Lenkachse ermöglicht, ist das erfindungsgemäße Steer-by-wire-Lenksystem crashoptimiert insoweit gestaltet, als die Verletzungsgefahr eines Fahrzeugführers im Kollisionsfall unabhängig davon, ob ein Airbag in dem Lenkrad vorgesehen ist oder auslöst, reduziert wird.

In einer praktischen Ausführungsform eines erfindungsgemäßen Steer-by-wire Lenksystems, die besonders einfach und kostengünstig realisierbar ist, weist die Antriebseinheit eine konzentrisch zur Lenkachse angeordnete Gewindespindel und ein funktional mit dieser Gewindespindel gekoppeltes Gewindeelement auf. Als ein solches Gewindeelement eignet sich insbesondere eine Gewindemutter oder ein sonstiges, komplementär zu der Gewindespindel ausgebildetes Gewindeelement. Das Verfahren des Lenkrades kann in diesem Fall auf einfache Art und Weise insbesondere dadurch erfolgen, dass die Gewindespindel oder das Gewindeelement drehend angetrieben wird und aufgrund der Drehbewegung eine translatorische Verschiebung in Richtung der Lenkachse bewirkt wird.

Die Erfindung betrifft insbesondere solche Steer-by-wire Lenksysteme bei welchen als Lenk-Widerstandsmittel ein Aktuator vorgesehen ist, insbesondere ein Force-Feedback-Aktuator.

Derartige Aktuatoren sind insbesondere hilfreich und sinnvoll, um Kraft- und/oder Momenteneinwirkungen, die von der Fahrbahn auf die Räder einwirken, haptisch über das Lenkrad an den Fahrzeugführer rückmelden zu können. Derartige Rückmeldungen in Form von Kräften und/oder Momenten können mit Hilfe eines Force-Feedback-Aktuators erzeugt und über das Lenkrad an den Fahrzeugführer übermittelt werden. Dies kann auch mittelbar dadurch erfolgen, dass eine Kraft und/oder ein Moment unmittelbar derart auf eine Lenkwelle übertragen wird, dass diese Kraft und/oder dieses Moment vom Fahrzeugführer am Lenkrad spürbar ist.

Alternativ oder in Ergänzung zu Vorstehendem ist die Antriebseinheit das Lenk-Widerstandsmittel durchdringend angeordnet. Damit ist in Verbindung mit einem als Lenk-Widerstandmittel vorgesehenen Aktuator und in Verbindung mit einer Gewindespindel insbesondere gemeint, dass für die Gewindespindel ein zentraler Hohlraum des Aktuators genutzt wird, um diesen zu durchdringen, insbesondere zentral zu durchdringen.

In einer weiteren praktischen Ausführungsform eines Steer-by-wire Lenksystems, die zum einen kompakt gestaltet ist und zum anderen eine geschützte Anordnung des Lenk-Widerstandmittels ermöglicht, ist das Lenk-Widerstandsmittel in axialer Richtung der Lenkachse betrachtet zwischen dem Lenkrad und der Antriebseinheit angeordnet.

Wenn das Lenkrad drehfest mit einer Lenkwelle gekoppelt ist und das Lenk-Widerstandsmittel zumindest teilweise drehfest mit der Lenkwelle verbunden ist, kann die - bedarfsweise oder permanente - Einleitung von Kräften und/oder Momenten mit Hilfe des Lenk-Widerstandsmittels direkt in die Lenkwelle eingeleitet werden. Zwischenelemente und Verluste aufgrund von dadurch bewirkten Elastizitäten und Dämpfungserscheinungen sind in diesem Fall ausgeschlossen.

Die mittels der Verstelleinheit bewegte Masse kann reduziert werden, wenn bei einem erfindungsgemäßen Steer-by-wire Lenksystem die Antriebseinheit Teil eines - insbesondere karosserieseitig festverbundenen, d.h. fahrzeugfesten - Gehäuseelements ist. Ferner ermöglicht es diese Gestaltung, die Antriebseinheit zunächst in dem Gehäuseelement vorzumontieren und anschließend in einem Endmontageschritt erst fahrzeugseitig zu verbauen. Dies ist herstellungstechnisch insbesondere für kurze Taktzeiten an der Montagelinie eines Automobilherstellers sinnvoll und ermöglicht es, einen Teil der Montagearbeit bedarfsweise auf Zulieferer zu verlagern.

In einer ersten Variante eines erfindungsgemäßen Steer-by-wire Lenksystems ist mindestens das Lenkrad gegenüber einem Gehäuseelement linear verfahrbar gelagert. Wenn nur das Lenkrad mitsamt einer drehfest damit gekoppelten Lenkwelle verfahrbar gelagert ist, ist das Gewicht, welches für ein Verfahren des Lenkrades in Richtung der Lenkachse angetrieben werden muss, besonders gering. Andererseits ist die Verstellung des Lenkrades, insbesondere, wenn diese mittels einer Gewindespindel erfolgt, mit einer relativ hohen Übersetzung verbunden, wodurch sich ein höheres, zu bewegendes Gewicht bei der Verstellung nur geringfügig auswirkt. Insoweit kann ein erfindungsgemäßes Steer-by-wire Lenksystem in einer anderen Variante auch ein Verschieben einer gesamten Verfahreinheit, insbesondere gemeinsam mit einem linear verschiebbar gelagerten Innengehäuse und einem in dem Innengehäuse angeordneten Lenk-Widerstandsmittel, beispielsweise ein Aktuator bzw. ein Force-Feedback-Aktuator, vorgesehen sein.

Dementsprechend ist in einer weiteren praktischen Ausführungsform eines erfindungsgemäßen Steer-by-wire Lenksystems das Lenkrad gemeinsam mit einer Verfahreinheit einschließlich Lenk-Widerstandsmittel und mindestens einem Element der Antriebseinheit linear verfahrbar gelagert.

Eine besonders kompakte und kostengünstige Realisierung eines erfindungsgemäßen Steer-by-wire Lenksystems ergibt sich, wenn eine Leistungselektronikeinheit für die Antriebseinheit derart angeordnet oder ausgebildet ist, dass diese zusätzlich für ein Lenk-Widerstandsmittel nutzbar ist, insbesondere für einen Aktuator, wie z.B. einen Force-Feedback-Aktuator. In diesem Fall ist die Leistungselektronikeinheit gemeinsam von dem Lenk-Widerstandsmittel und von der Antriebseinheit genutzt.

Weitere praktische Ausführungsformen der Erfindung sind nachfolgend im Zusammenhang mit den Zeichnungen beschrieben. Es zeigen:
- Fig. 1: ein Ausführungsbeispiel eines erfindungsgemäßen Steer-by-wire Lenksystems in einem vollständig eingefahrenen Zustand und
- Fig. 2: das Steer-by-wire Lenksystem aus Fig. 1 in einem zu 70 Prozent ausgefahrenen Zustand.

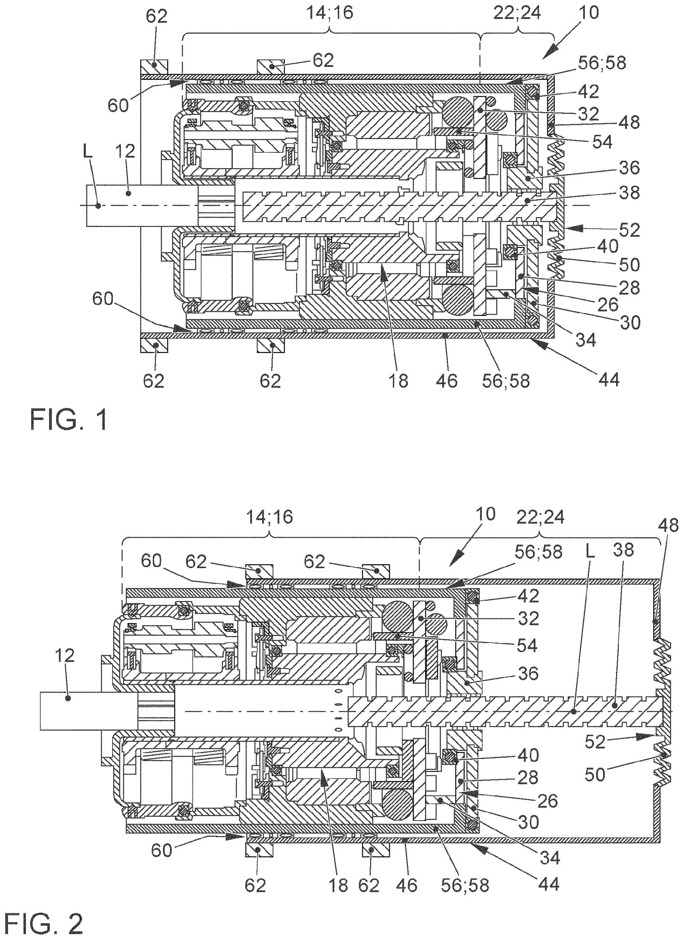

Figur 1 zeigt einen Teilbereich eines Steer-by-wire Lenksystems 10 für ein nicht dargestelltes Kraftfahrzeug mit einem - ebenfalls nicht dargestellten - Lenkrad, welches drehfest mit einer Lenkwelle 12 gekoppelt ist. Die Lenkwelle 12 ist um die Lenkachse L rotierbar gelagert, um durch die Erfassung einer aktiven Drehbewegung des Lenkrades ein Lenkmoment bzw. eine Lenkkraft auf lenkbare Räder des Kraftfahrzeuges zu übertragen. Die Drehbewegung des nicht dargestellten Lenkrades erfolgt dabei insbesondere in bekannter Art und Weise durch einen Fahrzeugführer.

In der gezeigten Ausführungsform ist als ein Lenk-Widerstandsmittel 14 ein Aktuator 16 vorgesehen. Mit diesem, als Lenk-Widerstandsmittel 14 dienenden Aktuator, bei dem es sich um einen Force-Feedback-Aktuator handelt, kann - permanent oder abhängig von einem oder mehreren Parametern, wie z.B. dem Fahrzeuguntergrund, auf welchem sich das Kraftfahrzeug gerade bewegt - das für das Drehen des Lenkrades erforderliche Moment erhöht werden, um dem Fahrzeugführer am Lenkrad einen möglichst genau zur Fahrsituation passenden haptischen Eindruck zu vermitteln, d.h. einen haptischen Eindruck, welcher dem Lenkgefühl entspricht, welches sich bei einer konventionellen Lenkung mit mechanischer Verbindung zwischen dem Lenkrad und den lenkbaren Rädern ergibt bzw. ergeben würde.

Der Aktuator 16 umfasst in der gezeigten Ausführungsform einen Aktuator-Motor 18, hier insbesondere in Form eines Hohlwellenmotors, sowie ein vom Aktuator-Motor 18 angetriebenes Aktuator-Modul 20, bei dem es sich in dieser Ausführungsform im Wesentlichen um ein Räderumlaufgetriebe mit feststehendem Riemen handelt. Der Aufbau des Aktuators 16 ist jedoch für die Erfindung von eher untergeordneter Bedeutung. Der Aktuator 16 kann insoweit auch konstruktiv anders aufgebaut sein.

Das Steer-by-wire Lenksystem 10 umfasst ferner ein Lenkrad-Verstellmittel 22, das es ermöglicht, die axiale Position des Lenkrades einschließlich der Lenkwelle 12 entlang der Lenkachse L zu verstellen. Anhand einer Zusammenschau der Figur 1, welche die Lenkwelle 12 in einer vollständig eingefahrenen Position zeigt, und Figur 2, welche die Lenkachse 12 in einer um etwa 70 Prozent ausgefahrenen Position zeigt, lässt sich gut erkennen, welche Elemente bei der Verschiebebewegung in Richtung der Lenkachse L verschoben werden.

Zur Durchführung der Verschiebebewegung umfasst das Lenkrad-Verstellmittel 22 in der gezeigten Ausführungsform eine konzentrisch zur Lenkachse L gelagerte Antriebseinheit 24 mit einem Verstellmittel-Motor 26. Der Verstellmittel-Motor 26 weist einen Stator 28 und einen Rotor 30 auf und ist in der gezeigten Ausführungsform als Scheibenläufermotor ausgebildet.

Alternativ - und in den Figuren nicht dargestellt - kann anstelle eines Scheibenläufermotors insbesondere auch eine Kupplungseinheit vorgesehen sein, die es ermöglicht, über eine Umschalteinrichtung - beispielsweise ein Schieberelais - den Aktuator-Motor 18 zusätzlich als Antrieb für die Antriebseinheit 24 zu verwenden. In diesem Fall kann ein separater Verstellmittel-Motor 26 eingespart werden.

Eine Leistungselektronikeinheit 32 ist - in axialer Richtung der Lenkachse L betrachtet - zwischen dem Aktuator 16 und der Abtriebseinheit 24 angeordnet. Die Leistungselektronikeinheit 32 ist über eine schematisch dargestellte Antriebseinheits-Kontaktierung 34 mit dem Stator 28 des Verstellmittel-Motors 26 verbunden.

Der Rotor 30 ist drehfest mit einer Gewindemutter 36 verbunden, die innenseitig im Eingriff zu einer Gewindespindel 38 steht. Die Gewindemutter 36 ist außenseitig über ein Lager 40 drehbar gelagert, hier über ein Kugellager. Die Einheit aus Gewindemutter 36 und Rotor 30 ist außenseitig über ein weiteres Lager 42 gelagert, hier ebenfalls ein Kugellager.

Wie aus den Figuren 1 und 2 ersichtlich ist, sind die vorstehenden Elemente, zumindest in dem eingefahrenen Zustand vollständig innerhalb eines einseitig offenen Außengehäuses 44 angeordnet, das aus einem - sich hier parallel zu der Lenkachse L erstreckenden - Gehäusemantel 46 und einer quer zur Lenkachse verlaufenden Gehäuserückwand 48 gebildet ist. Im Bereich der Gehäuserückwand 48 ist zwischen dem Gehäusemantel 46 und dem mittleren Bereich 52 der Gehäuserückwand 48, der sich in axialer Richtung an die Gewindespindel 38 anschließt, ein schematisch dargestelltes Crash-Element 50 angeordnet. Das Crash-Element 50 ist ein Verformungselement und derart gestaltet, dass es im Falle der Überschreitung einer auf das Lenkrad in Richtung der Lenkachse L wirkenden Maximalkraft eine Relativbewegung des Lenkrades in Richtung der Lenkachse L ermöglicht.

Als Verformungselemente zur Aufnahme von Crashimpulsen geeignet sind insbesondere sogenannte Abreißelemente, vorzugsweise "Abreißbleche", die als der Verbindung zwischen Cockpitträger 62 oder einem fest damit verbundenen Element, wie z.B. einer Gehäuserückwand 48, und einem geeigneten Element der jeweiligen Lenksäulenstruktur, z.B. in dem Ausführungsbeispiel einem fest mit der Gewindespindel 38 verbundenen Element angebracht. Dabei reißen die Elemente ab oder auf, um eine Verschiebung der Lenksäule in axialer Richtung zu ermöglichen. Häufig ist hierfür eine stabile Führung in axialer Richtung notwendig. In der gezeigten Ausführungsform sind dazu Linearlager 60 vorgesehen.

Eine im Bereich des in den Figuren 1 und 2 rechten Endes der Gewindestange 38 vorgesehene Verformungszone ermöglicht es, dass sich die Gewindestange 38 im Crashfall in Fahrzeuglängsrichtung betrachtet nach vorne in axialer Richtung verschieben und somit "ausweichen" kann. So kann ein seitliches Wegbiegen und eine dadurch resultierende Beschädigung der Gewindestange 38 vermieden werden, die eine kostenintensive Instandsetzung zur Folge hätte.

Der Gehäusemantel 46 ist karosserieseitig an dem nicht dargestellten Kraftfahrzeug fixiert, hier an einem schematisch dargestellten Cockpitträger 62.

Der Aktuator 14, der Verstellmittel-Motor 26, die Leistungselektronikeinheit 32 sowie die funktional diese verbindenden Elemente sind in einem Innengehäuse 56 angeordnet, das in der gezeigten Ausführungsform durch Profilschienen 58 gebildet ist. Das Innengehäuse 56 ist gegenüber dem Außengehäuse mittels eines schematisch dargestellten Linearlagers 60 entlang der Lenkachse L verschiebbar gelagert. Um eine Verschiebung der Lenkwelle 12 in Richtung der Lenkachse L zu bewirken, wird die Gewindemutter 36 mit Hilfe des Verstellmittel-Motors 26 rotatorisch angetrieben. Dadurch verschiebt sich das Innengehäuse 56 mitsamt allen darin angeordneten Elementen in Richtung der Lenkachse L.

Die Leistungselektronikeinheit 32 ist in der gezeigten Ausführungsform derart angeordnet, dass diese zusätzlich für den Aktuator 16 nutzbar ist. Dazu ist eine Kontaktierung 54 für den Aktuator-Motor 18 vorgesehen.

Zusammenfassend ergibt sich bei der in den Figuren 1 und 2 gezeigten Ausführungsform eine Funktionsintegration mit einer funktionalen Reihe (von einem nicht dargestellten Lenkrad aus in axialer Richtung betrachtet) aus folgenden Elementen:
- (kurze) Verbindungswelle vom Lenkrad zumindest bis zum Lenk-Widerstandsmittel 14, insbesondere einem Aktuator 16 bzw. Force-Feedback-Aktuator,
- unmittelbar auf Rotationselementen eines Getriebes des Force-Feedback-Aktuators montierter Rotorteil des Aktuator-Motors 18,
- konzentrische Lagerung aller rotierenden Elemente in jeweils anderen Gehäuseteilen und
- Leistungselektronikeinheit 32 zur Ansteuerung des Aktuator-Motors 18.

Mit "alle rotierenden Elemente" sind insbesondere sämtliche Wellen eines - nicht im Detail dargestellten und auch nicht im Detail erläuterten - gekoppelten zweistufigen Planetengetriebes und des Aktuator-Motors 18, insbesondere Hohlwellenmotors, gemeint.

Die Erfindung kann im Rahmen der Ansprüche und unter Berücksichtigung der Kenntnisse des zuständigen Fachmanns variiert werden.

In diesem Zusammenhang wird insbesondere darauf hingewiesen, dass in der in den Figuren 1 und 2 gezeigten Ausführungsform das Lenk-Widerstandsmittel 14, hier in Form des Aktuators 16, beim Verfahren der Lenkwelle 12 in Richtung der Lenkachse L ebenfalls mit der Lenkwelle 12 verfahren wird. Alternativ kann ein Lenk-Widerstandsmittel 14, insbesondere ein Aktuator 16, auch axial gleitend gegenüber der Lenkwelle positioniert und karosseriefest montiert sein, so dass sich das Lenk-Widerstandsmittel 14 bzw. der Aktuator 16 beim axialem Verfahren der Lenkwelle 12 nicht mitbewegt, sondern ortsfest an seinem im Kraftfahrzeug verbauten Ort verbleibt.

### Bezugszeichenliste

- 10: Steer-by-wire Lenksystem
- 12: Lenkwelle
- 14: Lenk-Widerstandmittel
- 16: Aktuator
- 18: Aktuator-Motor
- 20: Aktuator-Modul
- 22: Lenkrad-Verstellmittel
- 24: Antriebseinheit
- 26: Verstellmittel-Motor
- 28: Stator
- 30: Rotor
- 32: Leistungselektronikeinheit
- 34: Kontaktierung
- 36: Gewindemutter
- 38: Gewindespindel
- 40: Lager
- 42: Lager
- 44: Außengehäuse
- 46: Gehäusemantel
- 48: Gehäuserückwand
- 50: Crash-Element
- 52: mittlerer Bereich
- 54: Kontaktierung
- 56: Innengehäuse
- 58: Profilschiene
- 60: Linearlager
- 62: Cockpitträger

## Patentansprüche

1. Steer-by-wire Lenksystem (10) für ein Kraftfahrzeug mit einem Lenkrad, wobei das Lenkrad um eine Lenkachse (L) rotierbar gelagert ist, um durch die Erfassung einer aktiven Drehbewegung des Lenkrades ein Lenkmoment bzw. eine Lenkkraft auf lenkbare Räder des Kraftfahrzeuges zu übertragen, wobei mindestens ein Lenk-Widerstandsmittel (14) vorgesehen ist, mittels welchem permanent oder abhängig von einem oder mehreren Parametern das für das Drehen des Lenkrades erforderliche Moment erhöht wird, wobei ein Lenkrad-Verstellmittel (22) vorgesehen ist, um die axiale Position des Lenkrades entlang der Lenkachse (L) verstellen zu können, wobei eine konzentrisch zur Lenkachse (L) gelagerte Antriebseinheit (24) für das Lenkrad-Verstellmittel (22) vorgesehen ist, wobei die Antriebseinheit (24) eine konzentrisch zur Lenkachse (L) angeordnete Gewindespindel (38) und ein funktional mit dieser Gewindespindel (38) gekoppeltes Gewindeelement aufweist, wobei die Gewindespindel (38) vollständig innerhalb eines einseitig offenen Außengehäuses (44) angeordnet ist, das aus einem Gehäusemantel (46) und einer quer zur Lenkachse verlaufenden Gehäuserückwand (48) gebildet ist und wobei das Lenkrad-Verstellmittel (22) mindestens ein Crash-Element (50) aufweist, das im Falle der Überschreitung einer auf das Lenkrad in Richtung der Lenkachse (L) wirkenden Maximalkraft eine Relativbewegung des Lenkrades in Richtung der Lenkachse (L) ermöglicht,
**dadurch gekennzeichnet,**
**dass** im Bereich der Gehäuserückwand (48) zwischen dem Gehäusemantel (46) und einem mittleren Bereich (52) der Gehäuserückwand (48), der sich in axialer Richtung an die Gewindespindel (38) anschließt, als Crash-Element (50) ein Verformungselement angeordnet und derart gestaltet ist, dass im Falle der Überschreitung einer auf das Lenkrad in Richtung der Lenkachse L wirkenden Maximalkraft eine Relativbewegung des Lenkrades in Richtung der Lenkachse L ermöglicht ist.

2. Steer-by-wire Lenksystem (10) nach dem vorstehenden Anspruch, **dadurch gekennzeichnet, dass** als Lenk-Widerstandsmittel (14) ein Aktuator (16) vorgesehen ist und/oder die Antriebseinheit (24) das Lenk-Widerstandsmittel (14) durchdringend angeordnet ist.

3. Steer-by-wire Lenksystem (10) nach einem der vorstehenden Ansprüche, **dadurch gekennzeichnet, dass** das Lenk-Widerstandsmittel (14) in axialer Richtung der Lenkachse (L) betrachtet zwischen dem Lenkrad und der Antriebseinheit (24) angeordnet ist.

4. Steer-by-wire Lenksystem (10) nach einem der vorstehenden Ansprüche, **dadurch gekennzeichnet, dass** das Lenkrad drehfest mit einer Lenkwelle (12) gekoppelt ist und das Lenk-Widerstandsmittel (14) zumindest teilweise drehfest mit der Lenkwelle (12) verbunden ist.

5. Steer-by-wire Lenksystem (10) nach einem der vorstehenden Ansprüche, **dadurch gekennzeichnet, dass** die Antriebseinheit (24) Teil eines Gehäuseelements ist.

6. Steer-by-wire Lenksystem nach einem der vorstehenden Ansprüche, **dadurch gekennzeichnet, dass** mindestens das Lenkrad gegenüber einem Gehäuseelement linear verfahrbar gelagert ist.

7. Steer-by-wire Lenksystem (10) nach dem vorstehenden Anspruch, **dadurch gekennzeichnet, dass** das Lenkrad gemeinsam mit einer Verfahreinheit einschließlich Lenk-Widerstandsmittel (14) und mindestens einem Element der Antriebseinheit (24) linear verfahrbar gelagert ist.

8. Steer-by-wire Lenksystem (10) nach einem der vorstehenden Ansprüche, **dadurch gekennzeichnet, dass** eine Leistungselektronikeinheit (32) für die Antriebseinheit (24) derart angeordnet oder ausgebildet ist, dass diese zusätzlich für das Lenk-Widerstandsmittel (14) nutzbar ist.

## Claims

1. Steer-by-wire steering system (10) for a motor vehicle having a steering wheel, the steering wheel being mounted so as to be rotatable about a steering axis (L) in order to transmit a steering torque or a steering force to steerable wheels of the motor vehicle by detecting an active rotational movement of the steering wheel, at least one steering resistance means (14) being provided, by means of which the torque required for the rotation of the steering wheel is increased permanently or depending on one or more parameters, a steering wheel adjusting means (22) being provided to be able to adjust the axial position of the steering wheel along the steering axis (L), a drive unit (24) for the steering wheel adjusting means (22) being provided, which drive unit is mounted concentrically to the steering axis (L), the drive unit (24) having a threaded spindle (38) arranged concentrically to the steering axis (L) and a threaded element which is coupled functionally to this threaded spindle (38), the threaded spindle (38) being arranged completely inside an outer housing (44) which is open on one side and formed from a housing cover (46) and a housing rear wall (48) which extends transversely to the steering axis, and the steering wheel adjusting means (22) having at least one crash element (50) which, in the event of a maximum force acting on the steering wheel in the direction of the steering axis (L) being exceeded, makes possible a relative movement of the steering wheel in the direction of the steering axis (L),
**characterized in that,**
in the region of the housing rear wall (48) between the housing cover (46) and a central region (52) of the housing rear wall (48) which adjoins the threaded spindle (38) in the axial direction, a deformation element is arranged as a crash element (50) and is designed in such a way that, in the event that a maximum force acting on the steering wheel in the direction of the steering axis L is exceeded, a relative movement of the steering wheel in the direction of the steering axis L is made possible.

2. Steer-by-wire steering system (10) according to the preceding claim, **characterized in that** an actuator (16) is provided as a steering resistance means (14) and/or the drive unit (24) is arranged so as to penetrate through the steering resistance means (14).

3. Steer-by-wire steering system (10) according to either of the preceding claims, **characterized in that** the steering resistance means (14) is arranged between the steering wheel and the drive unit (24) when viewed in the axial direction of the steering axis (L).

4. Steer-by-wire steering system (10) according to any of the preceding claims, **characterized in that** the steering wheel is non-rotatably coupled to a steering shaft (12), and the steering resistance means (14) is at least partially connected to the steering shaft (12) for conjoint rotation.

5. Steer-by-wire steering system (10) according to any of the preceding claims, **characterized in that** the drive unit (24) is part of a housing element.

6. Steer-by-wire steering system according to any of the preceding claims, **characterized in that** at least the steering wheel is linearly movably mounted relative to a housing element.

7. Steer-by-wire steering system (10) according to the preceding claim, **characterized in that** the steering wheel is linearly movably mounted together with a moving unit including steering resistance means (14) and at least one element of the drive unit (24).

8. Steer-by-wire steering system (10) according to any of the preceding claims, **characterized in that** a power electronics unit (32) for the drive unit (24) is arranged or designed in such a way that it can additionally be used for the steering resistance means (14).

## Revendications

1. Système de direction à direction par câble (steer-by-wire) (10) pour un véhicule automobile comportant un volant de direction, dans lequel le volant de direction est monté de manière à pouvoir tourner autour d'un axe de direction (L) afin de transmettre un couple de direction ou une force de direction à des roues pouvant être dirigées du véhicule automobile par la détection d'un mouvement de rotation actif du volant de direction, dans lequel au moins un moyen de résistance de direction (14) est prévu, au moyen duquel le couple nécessaire pour la rotation du volant de direction est augmenté en permanence ou en fonction d'un ou de plusieurs paramètres, dans lequel un moyen de réglage de volant de direction (22) est prévu pour pouvoir régler la position axiale du volant de direction le long de l'axe de direction (L), dans lequel une unité d'entraînement (24) montée de manière concentrique à l'axe de direction (L) est prévue pour le moyen de réglage de volant de direction (22), dans lequel l'unité d'entraînement (24) présente une broche filetée (38) disposée de manière concentrique à l'axe de direction (L) et un élément fileté accouplé de manière fonctionnelle à ladite broche filetée (38), dans lequel la broche filetée (38) est disposée entièrement à l'intérieur d'un boîtier externe (44) ouvert d'un côté, lequel boîtier externe est formé à partir d'une enveloppe de boîtier (46) et d'une paroi arrière de boîtier (48) s'étendant transversalement à l'axe de direction et dans lequel le moyen de réglage de volant de direction (22) présente au moins un élément de collision (50) qui, en cas de dépassement d'une force maximale agissant sur le volant de direction dans la direction de l'axe de direction (L), permet un mouvement relatif du volant de direction dans la direction de l'axe de direction (L),
**caractérisé en ce que**
dans la zone de la paroi arrière de boîtier (48), entre l'enveloppe de boîtier (46) et une zone médiane (52) de la paroi arrière de boîtier (48), laquelle zone médiane se raccorde dans la direction axiale à la broche filetée (38), un élément de déformation est disposé en tant qu'élément de collision (50) et est conçu de telle sorte que, en cas de dépassement d'une force maximale agissant sur le volant de direction dans la direction de l'axe de direction L, un mouvement relatif du volant de direction dans la direction de l'axe de direction L est permis.

2. Système de direction à direction par câble (steer-by-wire) (10) selon la revendication précédente, **caractérisé en ce qu'**un actionneur (16) est prévu en tant que moyen de résistance de direction (14) et/ou l'unité d'entraînement (24) est disposée de manière à traverser le moyen de résistance de direction (14).

3. Système de direction à direction par câble (steer-by-wire) (10) selon l'une des revendications précédentes, **caractérisé en ce que** le moyen de résistance de direction (14), vu dans la direction axiale de l'axe de direction (L), est disposé entre le volant de direction et l'unité d'entraînement (24).

4. Système de direction à direction par câble (steer-by-wire) (10) selon l'une des revendications précédentes, **caractérisé en ce que** le volant de direction est accouplé de manière solidaire en rotation à un arbre de direction (12) et le moyen de résistance de direction (14) est relié au moins partiellement de manière solidaire en rotation à l'arbre de direction (12).

5. Système de direction à direction par câble (steer-by-wire) (10) selon l'une des revendications précédentes, **caractérisé en ce que** l'unité d'entraînement (24) fait partie d'un élément de boîtier.

6. Système de direction à direction par câble (steer-by-wire) selon l'une des revendications précédentes, **caractérisé en ce qu'**au moins le volant de direction est monté de manière à pouvoir se déplacer linéairement par rapport à un élément de boîtier.

7. Système de direction à direction par câble (steer-by-wire) (10) selon la revendication précédente, **caractérisé en ce que** le volant de direction est monté de manière à pouvoir se déplacer linéairement conjointement avec une unité de déplacement en incluant le moyen de résistance de direction (14) et au moins un élément de l'unité d'entraînement (24).

8. Système de direction à direction par câble (steer-by-wire) (10) selon l'une des revendications précédentes, **caractérisé en ce qu'**une unité électronique de puissance (32) pour l'unité d'entraînement (24) est disposée ou configurée de telle sorte que celle-ci peut être utilisée en outre pour le moyen de résistance de direction (14).
